# EUROPEAN PATENT APPLICATION

(11) **EP 2 881 378 A1**
(43) Date of publication of application: **10.06.2015**
(21) Application number: 14196393.4
(22) Date of filing: 04.12.2014
(51) Int. Cl.: C04B 28/02, C04B 28/04, E04C 5/07, E04H 4/00, C04B 111/00, C04B 111/20

(54) **Method for making a concrete box-shaped product, such as a tank or basin, and tank or basin for water purification and the treatment of sewage**

(30) Priority: 04.12.2013 IT RN20130049
(71) Applicant: Edil Impianti 2 S.r.l., 47822 Santarcangelo di Romagna (IT)
(72) Inventor: Campidelli, Patrizia, 47822 Santarcangelo di Romagna (IT)
(74) Representative: Zermani, Umberto

(57) **Abstract**

A method for making a concrete box-shaped product, such as a tank or basin for water purification and the treatment of sewage, comprises the steps of preparing a predetermined quantity of binder material (8); a predetermined quantity of steel fibres (10) and a mould (15) comprising a cavity (14) with predetermined shape defining the shape of at least part of said box-shaped product (1). The method also comprises mixing the predetermined quantity of binder material (8) with the predetermined quantity of steel fibres (10) to obtain a mixture (11) in which the steel fibres (10) are substantially homogeneously distributed, inserting the mixture (11) in said cavity of the mould (15), letting the mixture (11) mature inside the mould (15) for a predetermined time interval and then removing the box-shaped product (1) from the mould. The cavity (14) of the mould (15) does not contain any metal reinforcement and is completely filled with said mixture (11).

## Description

This invention relates to a method for making a concrete box-shaped product, such as a tank or basin and to a tank or basin for water purification and the treatment of sewage.

The invention is therefore applicable in particular to the buildingconstruction sector and, more specifically, to the construction of plants for the treatment of urban and industrial wastewater.

More precisely, this invention addresses the production of cement products such as tanks for urban and industrial water purification, firefighting water tanks and reservoirs, storm water drainage systems, drinking water reservoirs, water lifting stations, catch basins and technical rooms (cabins) in general, all able to be installed above ground or under ground.

In the prior art, these products are made using suitable moulds into which is cast a predetermined quantity of concrete previously prepared and mixed.

Since the fragility of this material is well known, reinforcements consisting of steel bars of suitable shape and size are made and placed inside the moulds in order to improve the strength of the castings. Disadvantageously, this process entails considerably increasing the production and design times and costs of the products.

Indeed, for each product, it is necessary to design not only the part and the mould but also the reinforcement to be embedded in the mould and the method of placing it therein.

Moreover, although the reinforcement greatly improves the strength of the material, it does not completely overcome the problems connected therewith, especially those concerning the non-uniformity of the reinforcement and those connected with concrete cover.

Efforts to obviate these problems in other technical fields, that is to say, not in the construction of plants for the treatment of urban and industrial wastewater, include integrating the action of the reinforcement with that of metallic fibres added separately into the mix when making the concrete.

It is, however, evident that although the combination of the reinforcement fibres with the traditional reinforcement bars does improve the strength and resistance properties of the product, it does at the same time considerably increase both production costs (fibres and steel bars) and design costs.

This invention therefore has for an aim to overcome the above mentioned drawbacks of the prior art by providing a method for making a concrete box-shaped product, such as a tank or basin, and a tank or basin for water purification and the treatment of sewage.

In particular, the aim of this invention is to provide a tank or basin for water purification and the treatment of sewage which is highly resistant and at once easy to make.

More precisely, the aim of this invention is to provide a method for making a box-shaped product, such as the tank or basin, which limits production and design costs while keeping the quality of the product at a high level. These aims are achieved by a method for making a concrete box-shaped product, such as a tank or basin, and by a tank or basin for water purification and the treatment of sewage, according to one or more of the appended claims.

These and other features will become more apparent from the description of a preferred non-limiting example embodiment of the method according to this invention, as illustrated in the accompanying drawings, in which:

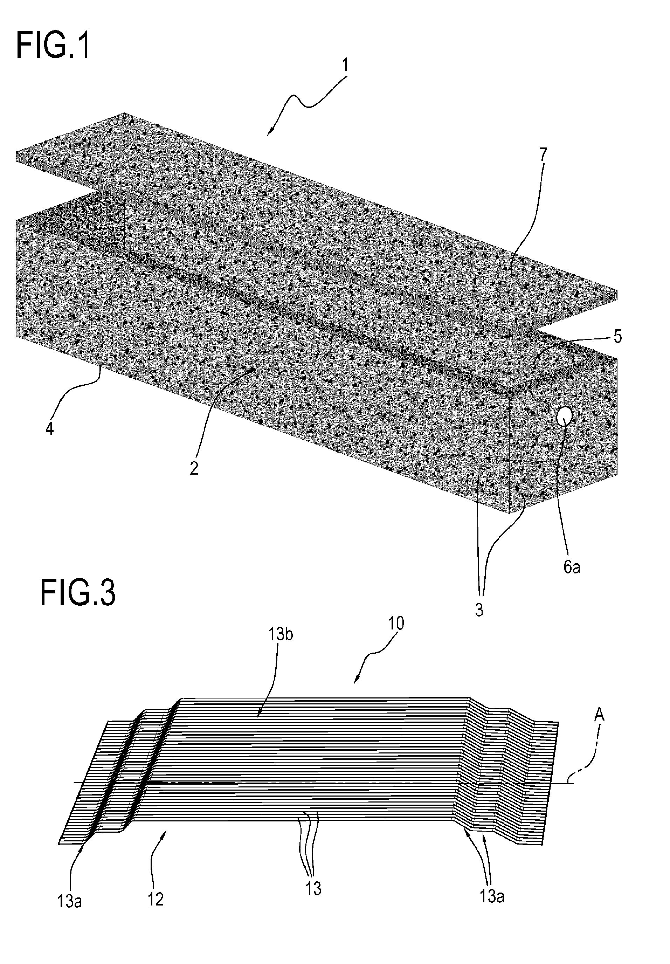

- Figure 1 is an exploded, perspective view showing a tank or basin according to this invention for water purification and/or the treatment of sewage;

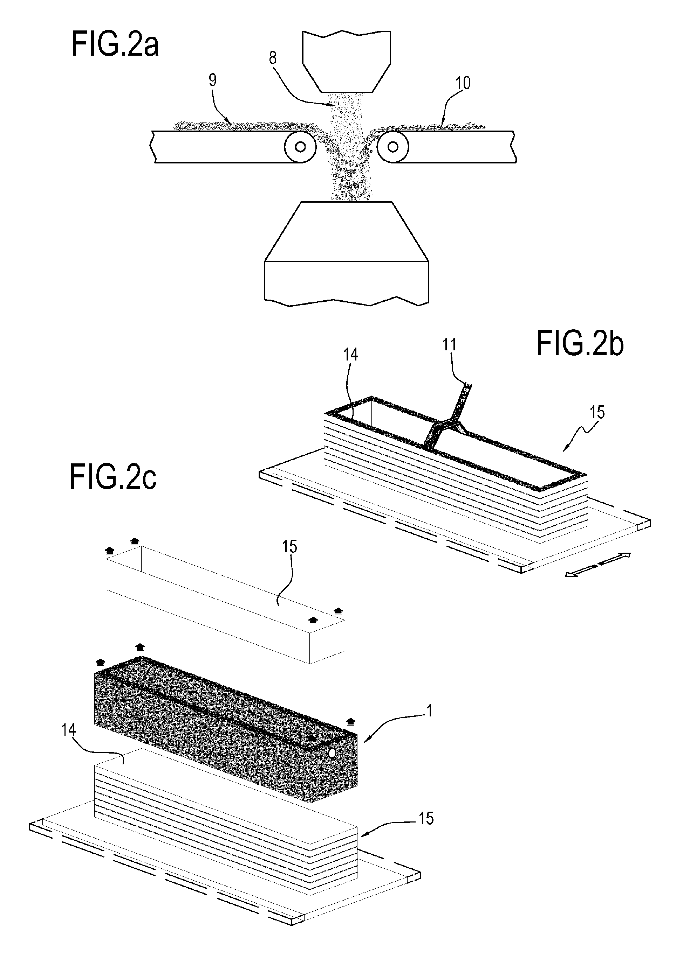

- Figures 2a-2c schematically illustrate the steps of the method for making a concrete box-shaped product, such as a tank or basin according to this invention;
- Figure 3 shows a perspective view of a steel fibre used in the method illustrated in Figure 2.

With reference to the accompanying drawings, the numeral 1 denotes a concrete box-shaped product made using the method according to this invention.

More specifically, the box-shaped product 1 is a tank or basin used in water purification and/or sewage treatment plants.

Thus, the product 1 comprises a box-shaped body 2 provided with a plurality of side walls 3 and at least one bottom wall 4.

The walls 3, 4 delimit a cavity 5 for receiving the fluids (water or sewage). Preferably, also, there is a closing wall 7, which is removable and placeable on top of the box-shaped body to occlude the cavity 5.

To allow the liquid to flow in and out of it, the tank (or basin) is provided with at least a first opening 6a and a second opening 6b made in two of its side walls 3.

The box-shaped body is also equipped with technological systems for treating the urban and industrial wastewaters.

According to the invention, the box-shaped body 2 is made of fibre-reinforced concrete without metallic reinforcement bars.

In other words, the structure both of the side walls 3 and of the bottom wall 4 (and also of the closing wall 7) is composed of:
- a predetermined quantity of binder material 8;
- a predetermined quantity of aggregate materials 9;
- a predetermined quantity of steel fibres 10.

Preferably, the steel fibres 10 are embedded in the binder material (concrete) at a density of between 25 kg/m³ and 40 kg/m³.

It should be noted therefore that, unlike the teachings of the prior art, the walls 3, 4, 7 do not have any metal reinforcement bars.

Despite the prior art teachings, however, experimental tests have shown that the use of fibre-reinforced concrete, where the metal reinforcement bars are totally substituted for the steel fibres, results in high-strength products which are considerably easier and more economical to make. Thus, the method for making these products according to the invention comprises mixing and casting directly into the cavity 14 of a mould 15 a substantially homogeneous mixture 11 of a plurality of components, including a predetermined quantity of binder material 8 and a predetermined quantity of steel fibres 10.

The binder material 8 is cement or cementitious mortar, preferably stored in suitable silos.

In the preferred embodiment, the cement is 1142.5 R type cement (used at a density of 430 kg/m³ of mixture).

The steel fibres 10 are preferably grouped in fibrous bodies 12 made up of a plurality of filiform elements 13 of predetermined length.

The filiform elements 13 are side by side and joined to one another along a respective direction of extension "A".

Thus, each fibrous body 12 forms a substantially two-dimensional steel plate whose length corresponds to the length of each filiform element 13 along the direction of extension "A", whilst its width corresponds to the width of a single filiform element 13 multiplied by the number of elements 13 joined to each other.

In the preferred embodiment, each filiform element 13 is made of high-strength steel (R=2300 MPa) with conventional elasticity modulus (E=210 GPa) and ultimate elongation of 6%.

Preferably, each filiform element 13 extends in an undulating fashion along its respective direction of extension "A".

Advantageously, this improves grip and increases the related toughness. In the embodiment illustrated, the filiform elements 13 have two undulating end portions 13a, each forming a plurality of steps, and a central portion 13b interposed between the end portions and extending in a linear fashion along the direction of extension "A".

Advantageously, this structure gives the fibres strength properties which are particularly suitable for this application.

More specifically, these fibres are made of a material having the following properties:
- breaking strength between 2,100 and 2,500 N/mm², preferably 2,300 N/mm²;
- Young's modulus between 200,000 and 220,000 N/mm², preferably approximately 210,000 N/mm²;
- ductility approximately 6%.

On the other hand, each fibre, that is, each filiform element has the following geometric properties:
- length between 50 and 70 mm, preferably approximately 60 mm;
- diameter between 0.80 and 1 mm, preferably approximately 0.90 mm;
- I/d ratio approximately 65.

Preferably, the method further comprises also using in the mixture 11 a predetermined quantity of aggregate materials 9, such as sand or gravel. The preferred aggregate materials 9 are:
- Gravel 5/16 = 719 kg/m³;
- Sand 0/4 = 347 kg/m³;
- Sand 0/6 = 713 kg/m³;
- Additive = 3.00 l/m³;
- Water = 175.00 l/m³.

In light of the above, the method according to the invention entails preparing at least a predetermined quantity of binder material 8 (cement), a predetermined quantity of steel fibres 10 and, preferably, a predetermined quantity of aggregate materials 9.

The materials are then mixed in a special mixing machine (or concrete mixer) to obtain the above mentioned mixture 11, in which the steel fibres 10 are substantially homogeneously distributed.

Preferably, associated with the mixer, there are metering means designed to feed the correct quantity of steel fibres 10 (and aggregates 9) into the mixer.

In the preferred, and tested, embodiments, the density of the steel fibres 10 in the mixture 11 has a density of between 25 and 40 kg/m³.

More precisely, in a first type of mixture 11, the density of steel fibres 10 is 25 kg/m³.

In a second type of mixture 11, the density of steel fibres 10 is 30 kg/m³.

In a third type of mixture 11, the density of steel fibres 10 is 40 kg/m³.

Advantageously, as will become clearer with reference to the examples below, these quantities allow optimizing the properties of the fibre-reinforced concrete, making it even tougher (and less expensive) than traditional reinforced concrete.

The method then comprises inserting the mixture into the cavity 14 of the mould 15 previously prepared.

It should be noted that the cavity 14 is substantially empty, that is to say, it forms a free space.

In other words, the method according to the invention does not involve placing any reinforcement bars inside the mould 15 (save the possibility of using individual small-diameter meshes to improve uniformity in the distribution of the fibres), which remains free and filled completely with the mixture 11 (except for accessory elements or sprues).

Thus, as stated above, the binder material 8 is mixed with the steel fibres 10 instead of placing steel reinforcement bars inside the cavity 14 of the mould 15

The mould 15 is shaped to form a box-shaped cavity 14 corresponding to the shape of the box-shaped body 2.

In the preferred embodiment, the mould 15 is modular, that is to say, it comprises a plurality of modules (not illustrated) which can be combined together in different ways to vary the shape and size of the cavity 14 (and hence of the box-shaped body).

After maturing and curing the mixture for a predetermined time interval, as a function of temperature and humidity, the product is extracted from the mould 15.

Lastly, the product 1, that is, the tank or basin, undergoes finishing and assembly processes to make it ready for use.

Set out below, by way of example, are experimental tests conducted by the Applicant to investigate the actual increase in toughness obtained with the method according to this invention.

### EXPERIMENTAL TESTS

The experimental tests were carried out using specimens made according to the method of the invention with the same binder material and the same aggregate materials to which different quantities of fibres were added. The properties of the binder material were as follows:
- Gravel 5/16 = 719 kg/m³;
- Sand 0/4 = 347 kg/m³;
- Sand 0/6 = 713 kg/m³;
- Cement 1142.5 R = 430 kg/m³;
- Additive = 3.00 l/m³;
- Water = 175.00 l/m³.

The results, shown below, have been divided into three groups, corresponding to the different quantities of fibres, that is, 25 kg/m³, 30 kg/m³ and 40 kg/m³.

Maturing (that is, curing) of the specimens was carried out in two stages: 21 days in water at 20°C, and 7 days in a curing chamber at a relative humidity of 99% and a temperature of 20°C.

All the tests were carried out after maturing for 28 days.

The graphs below clearly show the passage from the typical deterioration curve of a concrete without fibres to the improved strength properties represented by the curve of the fibre-reinforced concrete made according to the method of the invention.

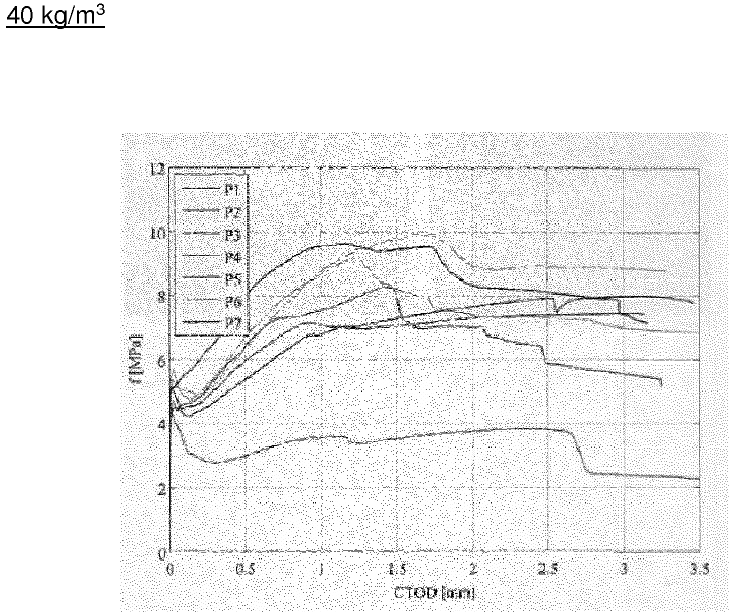

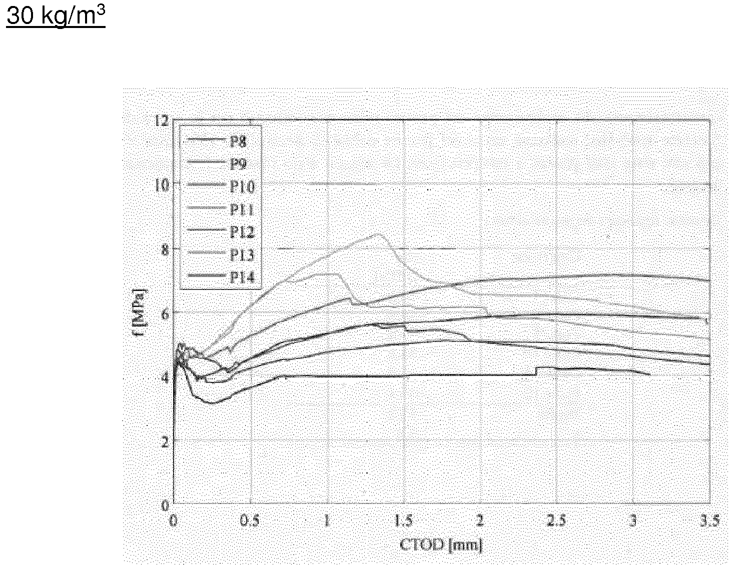

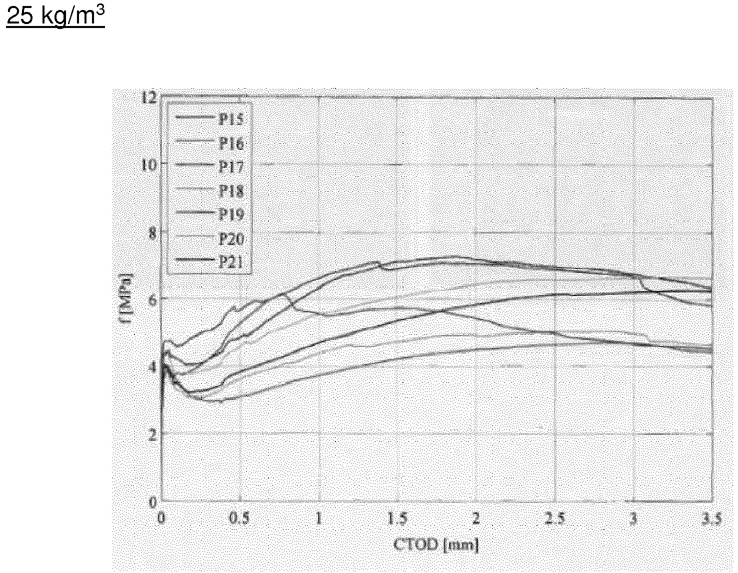

The results of the strength tests on the different specimens are shown below.

### 40 kg/m³

| Specimen number | f_{IF} [MPa] | CTOD_{m.fIF} [µm] | f_{eq(0-0.6)} [MPa] | f_{eq(0.6-3.0)} [MPa] | f₁ [MPa] | f₂ [MPa] | Do [-] | D₁ [-] |
|---|---|---|---|---|---|---|---|---|
| P1 | 5.1 | 13 | 4.9 | 7.4 | 5.8 | 8.0 | 0.95 | 1.51 |
| P2 | 4.7 | 24 | 5.3 | 7.2 | 6.4 | 7.4 | 1.12 | 1.36 |
| P3 | 4.3 | 22 | 3.0 | 3.5 | 3.2 | 2.4 | 0.72 | 1.13 |
| P4 | 5.3 | 22 | 5.8 | 7.8 | 7.3 | 7.0 | 1.09 | 1.34 |
| P5 | 4.4 | 25 | 5.6 | 6.9 | 7.0 | 5.5 | 1.25 | 1.24 |
| P6 | 5.7 | 25 | 5.6 | 9.0 | 7.0 | 8.8 | 1.00 | 1.60 |
| P7 | 5.1 | 14 | 6.8 | 8.8 | 8.6 | 7.4 | 1.33 | 1.29 |
| Average * | 5.1 | 21 | 5.7 | 7.8 | 7.0 | 7.4 | 1.12 | 1.39 |
| σ* | 0.4 | 6 | 0.6 | 0.9 | 0.9 | 1.1 | 0.14 | 0.14 |
| Characteristic value * | 4.1 | - | 4.3 | 6.0 | 5.0 | 5.0 | 0.81 | 1.09 |

| | | | | | | | | |
|---|---|---|---|---|---|---|---|---|
| * = The values of specimen P3 were not used to calculate the average because they were considered anomalous compared to the others. | | | | | | | | |

### 30 kg/m³

| Specimen number | f_{IF} [MPa] | CTOD_{m.fIF} [µm] | f_{eq(0-0.6)} [MPa] | f_{eq(0.6-3.0)} [MPa] | f₁ [MPa] | f₂ [MPa ] | Do [-] | D₁ [-] |
|---|---|---|---|---|---|---|---|---|
| P8 | 4.8 | 25 | 4.3 | 5.7 | 4.8 | 5.9 | 0.90 | 1.32 |
| P9 | 4.4 | 25 | 4.1 | 4.9 | 4.4 | 4.8 | 0.92 | 1.20 |
| P10 | 4.3 | 25 | 4.9 | 6.7 | 5.5 | 7.2 | 1.13 | 1.37 |
| P11 | 4.3 | 25 | 5.4 | 6.2 | 6.7 | 5.4 | 1.25 | 1.14 |
| P12 | 4.8 | 25 | 4.6 | 5.1 | 4.8 | 4.6 | 0.96 | 1.12 |
| P13 | 4.5 | 24 | 5.4 | 7.0 | 6.7 | 6.2 | 1.19 | 1.29 |
| P14 | 4.2 | 25 | 3.5 | 4.1 | 3.9 | 4.1 | 0.84 | 1.14 |
| Average | 4.5 | 25 | 4.6 | 5.7 | 5.3 | 5.5 | 1.03 | 1.23 |
| σ | 0.2 | 0.4 | 0.7 | 1.0 | 1.1 | 1.0 | 0.16 | 0.10 |
| Characteristic value | 4.0 | - | 3.2 | 3.5 | 3.0 | 3.3 | 0.69 | 1.02 |

### 25 kg/m³

| Specimen number | f_{IF} [MPa] | CTOD_{m.fIF} [µm] | f_{eq(0-0.6)} [MPa] | f_{eq(0.6-3.0)} [MPa] | f₁ [MPa] | f₂ [MPa] | Do [-] | D₁ [-] |
|---|---|---|---|---|---|---|---|---|
| P15 | 4.3 | 23 | 4.4 | 6.8 | 5.2 | 6.8 | 1.02 | 1.53 |
| P16 | 4.7 | 23 | 5.2 | 6.8 | 5.9 | 6.6 | 1.10 | 1.31 |
| P17 | 4.0 | 25 | 3.2 | 4.3 | 3.2 | 4.6 | 0.79 | 1.34 |
| P18 | 4.0 | 24 | 3.4 | 4.7 | 3.8 | 5.0 | 0.85 | 1.40 |
| P19 | 3.7 | 25 | 4.5 | 5.4 | 5.7 | 4. | 1.21 | 1.20 |
| P20 | 4.4 | 25 | 4.2 | 6.1 | 4.8 | 6.6 | 0.95 | 1.48 |
| P21 | 4.0 | 24 | 3.5 | 5.5 | 4.0 | 6.2 | 0.89 | 1.55 |
| Average | 4.2 | 24 | 4.1 | 5.7 | 4.7 | 5.8 | 0.97 | 1.40 |
| σ | 0.3 | 0.9 | 0.7 | 1.0 | 1.0 | 1.0 | 0.15 | 0.13 |
| Characteristic value | 3.5 | - | 2.5 | 3.6 | 2.6 | 3.7 | 0.67 | 1.14 |

Thus, as may be observed from the results of the experimental tests, the tensile strength of fibre-reinforced concrete compares well to the tensile strength typical, in conventional reinforced concrete products, of the steel the reinforcement bars are made of. In practice, the steel fibres can fulfil the same function as conventional reinforcement bars.

In light of the above, it is evident that the invention achieves the preset aims and brings important advantages.

Indeed, the use of the steel fibres instead of reinforcement bars, unlike the teachings of the prior art, makes it possible to obtain high-performing, quality products without increasing production and design costs.

Moreover, mixtures made using the above mentioned quantities of steel fibres allow obtaining products whose toughness is even greater than that of tanks made using traditional reinforcement consisting of interlaced steel bars embedded in the concrete.

## Claims

1. A method for making a concrete box-shaped product, such as a tank or basin for water purification and the treatment of sewage, comprising the steps of:
- preparing a predetermined quantity of binder material (8);
- preparing a predetermined quantity of steel fibres (10);
- preparing a mould (15) comprising a cavity (14) with predetermined shape defining the shape of at least part of said box-shaped product (1);
- mixing said predetermined quantity of binder material (8) with said predetermined quantity of steel fibres (10) to obtain a mixture (11) in which said steel fibres (10) are substantially homogeneously distributed;
- inserting said mixture (11) in said cavity of the mould (15);
- allowing said mixture (11) to mature in said mould (15) by waiting for a predetermined time interval;
- removing said at least part of the box-shaped product (1) from the mould; **characterized in that**, during said insertion step, said cavity (14) of the mould (15) does not contain any metal reinforcing bars and is completely filled with said mixture (11).

2. The method according to claim 1, **characterized in that**, before inserting said mixture (11) in said cavity of the mould (15), the cavity (14) is substantially empty.

3. The method according to claim 1 or 2, **characterized in that** said step of mixing the binder material (8) with said steel fibres (10) is carried out instead of preparing steel reinforcing bars in said cavity (14) of the mould (15).

4. The method according to any one of the preceding claims, **characterized in that** said steel fibres (10) are grouped in fibrous bodies (12) forming a plurality of filiform elements (13) having predetermined length, the elements being side by side and joined to one another along a respective direction of extension (A).

5. The method according to claim 4, **characterized in that** each filiform element (13) extends in an undulating fashion along its respective direction of extension (A).

6. The method according to claim 5, **characterized in that** said filiform elements (13) comprise two undulating end portions (13a), each forming a plurality of steps, and a central portion (13b) interposed between said end portions (13a) and extending in a linear fashion along said direction of extension (A).

7. The method according to any one of the preceding claims, **characterized in that** said mixture (11) has a density of steel fibres (10) of between 25 and 40 kg/m³.

8. The method according to claim 7, **characterized in that** said mixture (11) has a density of steel fibres (10) corresponding to one of the following values
- 25 kg/m³;
- 30 kg/m³;
- 40 kg/m³.

9. A tank or basin for water purification and the treatment of sewage, comprising:
- a box-shaped body (2) provided with a plurality of side walls (3) and at least one bottom wall (4);
- at least a first opening (6a) and a second opening (6b) made in two of said side walls (4) for allowing the water to flow into and out of the box-shaped body (2);
**characterized in that** said side walls (3) and said bottom wall (4) of the box-shaped body are made of fibre-reinforced concrete without metal reinforcing bars.

10. The tank or basin according to claim 9, **characterized in that** said side walls (3) and said bottom wall (4) are composed of:
- a predetermined quantity of binder material (8);
- a predetermined quantity of aggregate materials (9);
- a predetermined quantity of steel fibres (10) of between 25 kg/m³ and 40 kg/m³.
